(19) Europäisches Patentamt
European Patent Office
Office européen des brevets

(11) **EP 2 790 349 A1**

(12) **EUROPEAN PATENT APPLICATION**

(43) Date of publication:
**15.10.2014 Bulletin 2014/42**

(51) Int Cl.:
***H04L 9/00*** *(2006.01)*

(21) Application number: **13305452.8**

(22) Date of filing: **08.04.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Joye, Marc
35576 Cesson-Sévigné (FR)**
• **Libert, Benoît
35576 Cesson-Sévigné (FR)**

(74) Representative: **Huchet, Anne et al
Technicolor
1, rue Jeanne d'Arc
92443 Issy-les-Moulineaux Cedex (FR)**

(54) **Cryptographic devices and methods for generating and verifying commitments from linearly homomorphic signatures**

(57) A processor (120) of a device (100) generates a cryptographic commitment by receiving a vector $\vec{m}$, a public verification key of a homomorphic signature scheme, and a tag; choosing a signature $\sigma$ in the signature space; generating a commitment c by running the verification algorithm of the homomorphic signature scheme; and outputting the commitment c as intermediate values resulting from the verification algorithm.

| | |
|---|---|
| S1 | Choose $\sigma \xleftarrow{R} \mathbb{G}_1$ in the signature space. |
| S2 | Compute commitment $c = F(\sigma, \vec{m}, \mathrm{pk}, tag)$ by evaluating $F$ as the left-hand member of the verification equation $F(\sigma, \vec{m}, \mathrm{pk}, \tau) = 1_{\mathbb{G}_2}$. |
| S3 | Output commitment $com = c$ and decommitment $\mathrm{dec} = \sigma$. |
| S4 | Parses the commitment $com$ as $c \in \mathbb{G}_2$ and the opening $\mathrm{dec}$ as $\sigma \in \mathbb{G}_1$. |
| S5 | If $com$ and $\mathrm{dec}$ do not parse properly, return 0. |
| S6 | Otherwise, it return 1 if $c = F(\sigma, \vec{m}, \mathrm{pk}, tag)$ and 0 otherwise. |

Figure 2

EP 2 790 349 A1

**Description**

TECHNICAL FIELD

The present invention relates generally to cryptography, and in particular to non-malleable commitments from linearly homomorphic signatures.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A so-called commitment scheme can be said to be the digital equivalent of a sealed envelope: whatever is in the envelope remains secret until the envelope is opened. At the same time, the sender cannot change his mind about the content once the envelope has been closed. The goal of the commitment scheme is thus to force a sender to define a message that cannot be changed until it is revealed at some time in the future.

Commitment schemes can be non-interactive, which means that the so-called commitment phase and the opening phase both consist of a single message from the sender to the receiver. Put another way, the receiver does not have to interact with the sender in any way other than to receive messages.

A trapdoor commitment is a perfectly hiding commitment (i.e. where the hiding property holds even against an unbounded adversary) for which a trapdoor *tk* makes it possible to break the binding property and open a commitment to an arbitrary value. However, this should remain infeasible without the trapdoor. As will be seen during the description of the invention, a trapdoor commitment uses two additional algorithms called FakeCom and FakeOpen.

In a simulation-sound trapdoor commitment (SSTC), each commitment is labeled with a tag. A definition is given in P. MacKenzie, K. Yang. On Simulation-Sound Trapdoor Commitments. In Eurocrypt'04, Lecture Notes in Computer Science, vol. 3027, pages 382-400, 2004. This definition requires that even if the adversary is allowed to see equivocations of commitments to possibly distinct messages for several tags $tag_1, ... , tag_q$, it will not be able to break the binding property for a new $tag \notin \{tag_1, ... , tag_q\}$.

Another desirable property of a commitment scheme is that an adversary cannot commit to messages that are correlated to those of honest players. The notion of *independence* with respect to opening captures that the messages to which the adversary can open its commitment should be independent of the way honest senders' commitments are opened. See G. Di Crescenzo, Y. Ishai, R. Ostrovsky. Non-Interactive and Non-Malleable Commitment. In STOC'98, pages 141-150, 1998. and R. Gennaro and S. Micali. Independent Zero-Knowledge Sets. In ICALP'06, Lecture Notes in Computer Science, vol. 4052, pages 34-45, 2006.

For the commitments, groups $(\mathbb{G}, \mathbb{G}_T)$ of prime order $p > 2^\lambda$ are considered, where $\lambda$ is a security parameter, over which the discrete logarithm problem is presumed hard. Moreover an efficiently computable bilinear map (a.k.a. pairing) is assumed; $e : \mathbb{G} \times \mathbb{G} \rightarrow \mathbb{G}_T$. Namely, for any $g, h \in \mathbb{G}$, and any $a, b \in \mathbb{Z}$, $e(g^a, h^b) = e(g, h)^{ab}$. Moreover, $e(g, h) \neq 1_{\mathbb{G}_T}$ if and only if $g \neq 1_{\mathbb{G}}$ and $h \neq 1_{\mathbb{G}}$.

In these groups, it is possible to rely on the following hardness assumptions:

- the Computational Diffie-Hellman Problem (CDH);
- the Decision Linear Problem (DLIN) - see D. Boneh, X. Boyen, H. Shacham. Short Group Signatures. In Crypto'04, Lecture Notes in Computer Science, vol. 3152, pages 41-55, Springer, 2004; and
- the Simultaneous Double Pairing problem (SDP). This assumption is implied by the DLIN assumption in the group $\mathbb{G}$, - see M. Abe, K. Haralambiev, M. Ohkubo. Signing on Elements in Bilinear Groups for Modular Protocol Design. Cryptology ePrint Archive: Report 2010/133, 2010.

The prior art comprises several constructions of non-interactive non-malleable commitments that are not re-usable in that the adversary is only given one honestly generated commitment before outputting a commitment of its own. See for example:

- G. Di Crescenzo, Y. Ishai, R. Ostrovsky. Non-Interactive and Non-Malleable Commitment. In STOC'98, pp. 141-150, 1998.

- US 6301664 (G. Di Crescenzo, Y. Ishai, R. Ostrovsky. Method and System for Non-Malleable and Non-Interactive Cryptographic Commitment in a Network. 2001.)
- G. Di Crescenzo, J. Katz, R. Ostrovsky, A. Smith. Efficient and Non-interactive Non-malleable Commitment. In Eurocrypt'01, Lecture Notes in Computer Science, vol. 2045, pp. 40-59, 2001.

The notion of re-usable non-malleable commitments was proposed by Damgård and Groth [I. Damgård, J. Groth. Non-interactive and reusable non-malleable commitment schemes. In STOC'03, pages 426-437, 2003.]. Re-usable non-malleable commitments can be constructed from simulation-sound trapdoor commitments [see J. Garay, P. MacKenzie, K. Yang. Strengthening Zero-Knowledge Protocols Using Signatures. In Eurocrypt'03, Lecture Notes in Computer Science, vol. 2656, pp. 177-194, 2003. and P. MacKenzie, K. Yang. On Simulation-Sound Trapdoor Commitments. In Eurocrypt'04, Lecture Notes in Computer Science, vol. 3027, pp. 382-400, 2004.] and multi-trapdoor commitments [R. Gennaro. Multi-Trapdoor Commitments and Their Applications to Proofs of Knowledge Secure Under Concurrent Man-in-the-Middle Attacks. In Crypto'04, Lecture Notes in Computer Science, vol. 3152, pp. 220-236, 2004].

In their paper, MacKenzie and Yang gave constructions of SSTCs from signature schemes admitting efficient $\Sigma$ protocols. As is known in the art, a $\Sigma$ protocol is a three move interactive protocol between a prover and a verifier. In fact, as noted by Fujisaki [E. Fujisaki. New Constructions of Efficient Simulation-Sound Commitments Using Encryption and Their Applications. In CT-RSA'12, Lecture Notes in Computer Science, vol. 7178, pp. 136-155, 2012.], all known constructions of noninteractive simulation-sound or multi-trapdoor [see the paper by Gennaro] commitments build on signature schemes for which an efficient $\Sigma$ protocol allows proving knowledge of a signature.

The idea is to commit to a message $m$ by using $m$ as the challenge of a $\Sigma$ protocol for proving knowledge of a signature $\sigma = \text{Sig}(sk, tag)$ on the tag. The commitment is given by the first message $a$ of the $\Sigma$ protocol transcript $(a, m, z)$, which is obtained by simulating a proof of knowledge of a valid signature $\sigma$ on the message *tag*. The commitment is subsequently opened by revealing $z$. By the special soundness of the $\Sigma$ protocol, unless the sender actually knows a valid signature on *tag*, it can only open a given commitment $a$ to one message $m$.

While simple, the above construction does not readily extend to commit to vectors if we want the sender to remain able to efficiently prove statements about individual coordinates of the committed vector. Moreover, the method based on $\Sigma$ protocol does not make it possible to commit to vectors of group elements: to this end, we would need a $\Sigma$ protocol where challenges are vectors of group elements. In the previously mentioned paper, Fujisaki gave an alternative construction of SSTC system based on encryption schemes. However, this construction is interactive as several rounds of interaction are needed between the sender and the receiver during the commitment phase.

Non-interactive commitments to group elements were described in for example:

- J. Groth. Simulation-Sound NIZK Proofs for a Practical Language and Constant Size Group Signatures. In Asiacrypt'06, Lecture Notes in Computer Science, vol. 4284, pp. 444-459, Springer, 2006.
- J. Groth, A. Sahai. Efficient non-interactive proof systems for bilinear groups. In Eurocrypt'08, Lecture Notes in Computer Science, vol. 4965, pp. 415-432, 2008.
- J. Cathalo, B. Libert, M. Yung. Group Encryption: Non-Interactive Realization in the Standard Model. In Asiacrypt'09, Lecture Notes in Computer Science, vol. 5912, pp. 179-196, 2009.
- J. Groth. Homomorphic trapdoor commitments to group elements. Cryptology ePrint Archive: Report 2009/007, 2009.

However, these schemes are all homomorphic and thus malleable. To date, the only known non-interactive non-malleable commitment schemes whose messages and openings only consist of group elements were described by Fischlin et al. [see M. Fischlin, B. Libert, M. Manulis. Non-interactive and Re-usable Universally Composable String Commitments with Adaptive Security. In Asiacrypt'11, Lecture Notes in Computer Science, vol. 7073, pp. 468-485, 2011.]. However, these constructions cannot be length-reducing (i.e., the commitment cannot be shorter than the message) as they achieve universal composability [see R. Canetti. Universally Composable Security: A New Paradigm for Cryptographic Protocols. In FOCS'01 pp. 136-145, 2001. and R. Canetti, M. Fischlin. Universally Composable Commitments. In Crypto'01, Lecture Notes in Computer Science, vol. 2139, pp. 19-40, 2001] and it is known that universally composable commitments must be extractable (namely, a trapdoor information should make it possible to recover the message contained in the commitment).

It will thus be appreciated that it is desired to have a commitment scheme that provides a modular construction of non-interactive non-malleable trapdoor commitment to vectors $\vec{m} = (m_1, \ldots, m_n)$ while retaining the ability of efficiently proving properties about individual vector coordinates $\{m_i\}_{i=1}^{n}$. This precludes the trivial solution consisting in committing to a hash value of the vector $\vec{m}$. It is also desired that the scheme enables to commit to group elements without knowing their discrete logarithms. In other words, the messages to be committed to should consist of vectors $(M_1, \ldots, M_n) \in \mathbb{G}^n$ of group elements, where $\mathbb{G}$ is a group over which a bilinear map $e : \mathbb{G} \times \mathbb{G} \to \mathbb{G}_T$ is efficiently

computable. The commitment scheme should preferably also be designed so that the commitment string com has constant size, no matter how many group elements $(M_1, \ldots , M_n)$ are committed to at once. Finally, openings should preferably also consist of elements in $\mathbb{G}$, which will make it possible to generate efficient non-interactive proofs (using the techniques of [J. Groth, A. Sahai. Efficient non-interactive proof systems for bilinear groups. In Eurocrypt'08, Lecture Notes in Computer Science, vol. 4965, pp. 415-432, 2008.]) that committed group elements satisfy certain properties. The present invention provides such a commitment scheme.

SUMMARY OF INVENTION

In a first aspect, the invention is directed to a method of generating a non-malleable cryptographic commitment. A processor of a device receives a vector, a public verification key of a homomorphic signature scheme associated with a space where signatures live, and a tag; chooses an element in the space where signatures live; generates a commitment using the vector, the public verification key, the tag and the element; and outputs the commitment. The commitment is generated by running the verification algorithm of the homomorphic signature scheme on the vector, the public verification key, the tag and the element.

In a first embodiment, the size of the commitment is independent of the size of the vector.

In a second embodiment, the commitment is structure-preserving.

In a third embodiment, the dimension of the vector is greater than or equal to 2.

In a fourth embodiment, the commitment allows to prove knowledge of an opening using zero-knowledge proof.

In a fifth embodiment, the commitment is generated as intermediate values resulting from the verification algorithm.

In a second aspect, the invention is directed to a device for generating a non-malleable cryptographic commitment. The device comprises at least one interface configured to: receive a vector, a public verification key of a homomorphic signature scheme associated with a space where signatures live, and a tag; and output a commitment. The device further comprises a processor configured to: choose an element in the space where signatures live; an generate the commitment using the vector, the public verification key, the tag and the element. The processor is configured to generate the commitment by running the verification algorithm of the homomorphic signature scheme on the vector, the public verification key, the tag and the element.

In a first embodiment, the size of the commitment is independent of the size of the vector.

In a second embodiment, the commitment is structure-preserving.

In a second embodiment, the dimension of the vector is greater than or equal to 2.

In a third embodiment, the commitment allows to prove knowledge of an opening using zero-knowledge proof.

In a fourth embodiment, the commitment is generated as intermediate values resulting from the verification algorithm.

In a third aspect, the invention is directed to a non-transitory computer program product storing instructions that, when executed by a processor, perform the method of any embodiment of the first aspect.

BRIEF DESCRIPTION OF DRAWINGS

Preferred features of the present invention will now be described, by way of non-limiting example, with reference to the accompanying drawings, in which:

Figure 1 illustrates a cryptographic device for generating commitments and a cryptographic device for verification of commitments according to a preferred embodiment of the invention; and
Figure 2 illustrates a method for generating a commitment and for verifying the opening of a commitment according to a preferred embodiment of the invention.

DESCRIPTION OF EMBODIMENTS

A main idea of the present invention is based on that, under a certain mild condition, linearly homomorphic structure-preserving signatures imply length-reducing non-malleable structure-preserving commitments to vectors of group elements. As a result, the invention provides a length-reducing non-malleable structure-preserving trapdoor commitment. It will be noted that the scheme is not strictly structure-preserving (which is to say that the commitment string does not live in the same group as the message, according to the terminology of M. Abe, K. Haralambiev, M. Ohkubo. Group to Group Commitments Do Not Shrink. In Eurocrypt'12, Lecture Notes in Computer Science, vol. 7237, pp. 301-317, 2012.). Rather, the scheme is structure-preserving in the non-strict sense as the commitment string lives in

$\mathbb{G}_T$ rather than $\mathbb{G}$ (but, as shown in the paper, strictly structure- preserving commitments cannot be length-reducing).

Still, openings only consist of elements in $\mathbb{G}$, which makes it possible to generate efficient non-interactive proofs that committed group elements satisfy certain properties.

The schemes of the present invention are obtained by first constructing simulation-sound trapdoor commitments (SSTC) to group elements (see J. Garay, P. MacKenzie, K. Yang Strengthening Zero-Knowledge Protocols Using Signatures. In Eurocrypt'03, Lecture Notes in Computer Science, vol. 2656, pp. 177-194, 2003 and P. MacKenzie, K. Yang. On Simulation-Sound Trapdoor Commitments. In Eurocrypt'04, Lecture Notes in Computer Science, vol. 3027, pp. 382-400, 2004).

SSTC schemes were first suggested in the paper by Garay, MacKenzie and Yang as a tool for constructing universally composable zero-knowledge proofs (see R. Canetti. Universally Composable Security: A New Paradigm for Cryptographic Protocols. In FOCS'01, pp. 136-145, 2001.) MacKenzie and Yang subsequently gave a simplified security definition that suffices to provide non-malleability with respect to opening in the sense of the definition of re-usable non-malleable commitments (see I. Damgård, J. Groth. Non-interactive and reusable non-malleable commitment schemes. In STOC'03, pages 426-437, 2003.).

It is first noted that *any* constant-size linearly homomorphic structure-preserving signature necessarily complies with the following template.

**Keygen**(pp, *n*): given public parameters pp, which contain the description of groups ($\mathbb{G}$, $\mathbb{G}_T$) with a bilinear map, and the dimension $n \in \mathbb{N}$ of the subspace to be signed, choose constants $n_z$, $n_v$, $m \in \mathbb{N}$. Of these, $n_z$ and $n_v$ determine the signature length while $m$ is the number of equations in the verification algorithm.

Then choose elements $\{F_{j,\mu}\}_{j \in \{1,\dots,m\}, \mu \in \{1,\dots,n_z\}}, \{G_{ji}\}_{i \in \{1,\dots,n\}, j \in \{1,\dots m\}}$ in the group $\mathbb{G}$. The public key is

$$\mathrm{pk} = \left( \{F_{j,\mu}\}_{j \in \{1,\dots,m\}, \mu \in \{1,\dots,n_z\}}, \{G_{ji}\}_{i \in \{1,\dots,n\}, j \in \{1,\dots,m\}} \right)$$

and the private key comprises information related to the representation of public key elements with regard to specific bases.

**Sign**(sk, $\tau$, ($M_1, \dots, M_n$)): outputs a tuple

$$\sigma = \left( Z_1, \dots, Z_{n_z}, V_1, \dots, V_{n_v} \right) \in \mathbb{G}^{n_z + n_v}.$$

**SignDerive**$\left( \mathrm{pk}, \tau, \left\{ \left( \omega_i, \sigma^{(i)} \right) \right\}_{i=1}^{\ell} \right)$: parses each signature $\sigma^{(i)}$ as ($Z_1^{(i)}, \dots, Z_{n_z}^{(i)}, V_1^{(i)}, \dots, V_{n_v}^{(i)}$) for $i$ = 1 to $\ell$ and then computes

$$Z_\mu = \prod_{i=1}^{\ell} Z_\mu^{(i)\,\omega_i} \qquad V_v = \prod_{i=1}^{\ell} V_v^{(i)\,\omega_i} \qquad \mu \in \{1, \dots, n_z\}, v \in \{1, \dots, n_v\}$$

and outputs, possibly after a re-randomization step, $\sigma = (Z_1, \dots, Z_{n_z}, V_1, \dots, V_{n_v})$

**Verify**(pk, $\sigma$, $\tau$, ($M_1, \dots, M_n$)): given a signature $\sigma = (Z_1, \dots, Z_{n_z}, V_1, \dots, V_{n_v}) \in \mathbb{G}^{n_z + n_v}$, a vector ($M_1, \dots, M_n$) and a tag $\tau$, return 0 if ($M_1, \dots, M_n$) = ($1_{\mathbb{G}}, \dots, 1_{\mathbb{G}}$). Otherwise:

    1. For each $j \in \{1, \dots, m\}$ and $v \in \{1, \dots, n_v\}$, compute one-to-one encodings $T_{j,v} \in \mathbb{G}$ of the tag $\tau$ as a group element. (It is possible to relax this condition to have collision-resistant deterministic encodings. Here, injectivity is assumed for simplicity.)

    1. For $j$ = 1 to $m$, compute

$$c_j = \prod_{\mu=1}^{n_z} e\big(F_{j,\mu}, Z_\mu\big) \cdot \prod_{v=1}^{n_v} e\big(T_{j,v}, V_v\big) \cdot \prod_{i=1}^{n} e\big(G_{j,i}, M_i\big)$$

2. Return 1 if and only if $c_j = 1_{G_T}$ for each $j \in \{1, \dots, m\}$.

In the following description, a linearly homomorphic structure-preserving signature is 'regular' if, for each file identifier (i.e. 'tag'), any non-trivial vector $(M_1, \dots, M_n) \neq (1_{G}, \dots, 1_{G})$ has a valid signature.

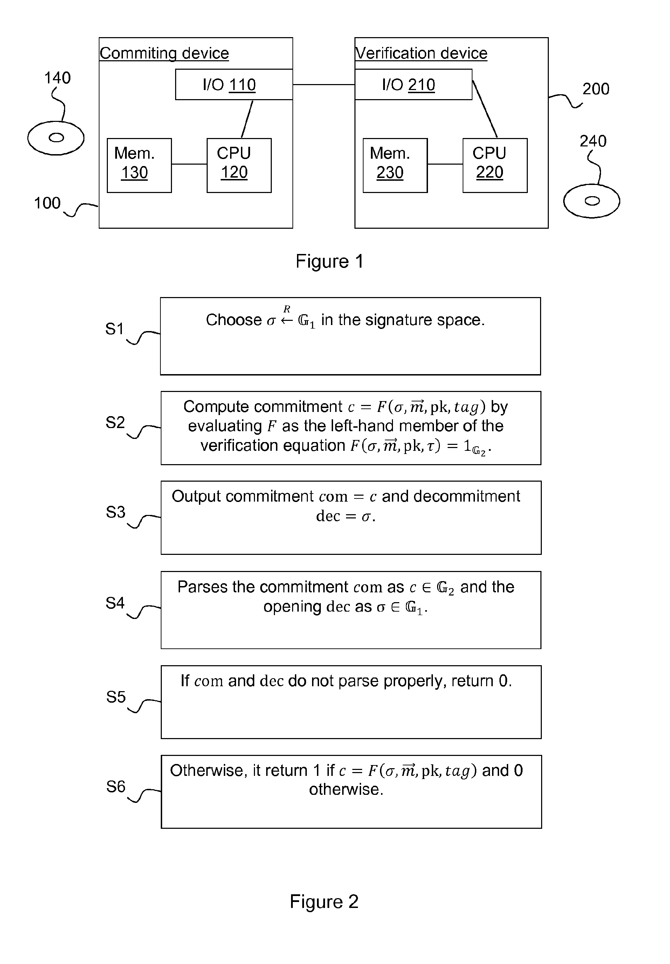

Figure 1 illustrates a cryptographic device 100 for generating commitments and a cryptographic device 200 for verification of commitments according to a preferred embodiment of the invention. The devices 100, 200 each comprise at least one interface unit 110, 210 configured for communication, at least one processor ("processor") 120, 220 and at least one memory 130, 230 configured for storing data, such as accumulators and intermediary calculation results. Figure 1 also shows a first and a second computer program product (non-transitory storage medium) 140, 240 such as a CD-ROM or a DVD comprises stored instructions that, when executed by the processor 120, 220, respectively generate and verify a commitment according to the present invention.

Construction of Structure-Preserving Simulation-Sound Trapdoor Commitments

If $\Pi^{SPS}$ = (Keygen, Sign, SignDerive, Verify) is a linearly homomorphic structure-preserving signature (SPS), then a structure-preserving simulation-sound trapdoor commitment (SSTC) may be constructed as follows:

**SSTC.Setup**($\lambda$, $n$): given the desired dimension $n \in \mathbb{N}$ of commited vectors, choose public parameters pp for the linearly homomorphic SPS scheme. Then run $\Pi^{SPS}$.Keygen(pp,$n$) to obtain pk = $(\{F_{j,\mu}\}_{j \in \{1,\dots,m\}, \mu \in \{1,\dots,n_z\}}, \{G_{ji}\}_{i \in \{1,\dots,n\}, j \in \{1,\dots,m\}})$ for some constants $n_z$, $n_v$, $m$ and a secret key sk. The commitment key is $pk$ = pk and the trapdoor $tk$ consists of sk. It is to be noted that the public key defines a signature space $\mathbb{G}^{n_z+n_v}$ for constants $n_z$ and $n_v$.

**SSTC.Com**($pk$, $tag$, $(M_1, \dots, M_n)$): to commit to a vector $(M_1, \dots, M_n) \in \mathbb{G}^n$ with respect to the tag $tag = \tau$, choose

$$\big(Z_1, \dots, Z_{n_z}, V_1, \dots, V_{n_v}\big) \xleftarrow{R} \mathbb{G}^{n_z+n_v}$$

in the signature space. Then run steps 1 and 2 of **Verify**(pk, $\sigma$, $\tau$, $(M_1, \dots, M_n)$), i.e. compute

$$c_j = \prod_{\mu=1}^{n_z} e\big(F_{j,\mu}, Z_\mu\big) \cdot \prod_{v=1}^{n_v} e\big(T_{j,v}, V_v\big) \cdot \prod_{i=1}^{n} e\big(G_{j,i}, M_i\big) \qquad j \in \{1, \dots, m\}$$

where $\{T_{j,v}\}_{j,v}$ form an injective encoding of $tag = \tau$ as a set of group elements. The commitment string is given by com = $(c_1, \dots, c_m)$ whereas the de-commitment consists of dec = $(Z_1, \dots, Z_{n_z}, V_1, \dots, V_{n_v})$.

**SSTC.FakeCom**($pk$, $tk$, $tag$): proceeds like SSTC.Com with

$$\big(\widehat{M}_1, \dots, \widehat{M}_n\big) \xleftarrow{R} \mathbb{G}^n.$$

If $\big(\widehat{com}, \widehat{dec}\big)$ denotes the resulting pair, the algorithm ouputs $\widetilde{com} = \widehat{com}$ and aux, which consists of the pair $aux = \big(\big(\widehat{M}_1, \dots, \widehat{M}_n\big), \widehat{dec}\big)$ for $tag = \tau$.

**SSTC.FakeOpen**$\left(\text{aux}, tk, tag, \widetilde{\text{com}}, (M_1, \ldots, M_n)\right)$: parses $\widetilde{\text{com}}$ as $(\tilde{c}_1, \ldots, \tilde{c}_m)$ and aux as $((\hat{M}_1, \ldots, \hat{M}_n), (\hat{Z}_1, \ldots, \hat{Z}_{n_z}, \hat{V}_1, \ldots, \hat{V}_{n_v}))$. It first generates a linearly homomorphic signature on $(M_1/\hat{M}_1, \ldots, M_n/\hat{M}_n)$ for the *tag* = $\tau$. Namely, using the trapdoor *tk* = sk, compute

$$\sigma' = \left(Z'_1, \ldots, Z'_{n_z}, V'_1, \ldots, V'_{n_v}\right) \leftarrow \Pi^{\text{SPS}}.\text{Sign}\left(\text{sk}, \tau, \left(M_1/\hat{M}_1, \ldots, M_n/\hat{M}_n\right)\right).$$

Since σ' is a valid signature and aux = $((\hat{M}_1, \ldots, \hat{M}_n), (\hat{Z}_1, \ldots, \hat{Z}_{n_z}, \hat{V}_1, \ldots, \hat{V}_{n_v}))$ satisfies

$$\tilde{c}_j = \prod_{\mu=1}^{n_z} e\left(F_{j,\mu}, \hat{Z}_\mu\right) \cdot \prod_{v=1}^{n_v} e\left(T_{j,v}, \hat{V}_v\right) \cdot \prod_{i=1}^{n} e\left(G_{j,i}, \hat{M}_i\right) \qquad j \in \{1, \ldots, m\}$$

the fake opening algorithm can run

$$\left(\tilde{Z}_1, \ldots, \tilde{Z}_{n_z}, \tilde{V}_1, \ldots, \tilde{V}_{n_v}\right) \leftarrow \text{Sign.Derive}(\text{pk}, \tau, \{(1, \sigma'), (1, \hat{\sigma})\}),$$

where $\hat{\sigma} = (\hat{Z}_1, \ldots, \hat{Z}_{n_z}, \hat{V}_1, \ldots, \hat{V}_{n_v})$. By construction, $\widehat{\text{dec}} = \left(\tilde{Z}_1, \ldots, \tilde{Z}_{n_z}, \tilde{V}_1, \ldots, \tilde{V}_{n_v}\right)$ is a valid de-commitment to the vector $(M_1, \ldots, M_n)$ with respect to *tag* = $\tau$.

**SSTC.Verify**(*pk, tag,* $(M_1, \ldots, M_n)$*, com, dec*): parses the commitment as $(c_1, \ldots, c_m) \in \mathbb{G}_T^m$ and the opening dec as $(Z_1, \ldots, Z_{n_z}, V_1, \ldots, V_{n_v}) \in \mathbb{G}^{n_z + n_v}$. If these do not parse properly, it returns 0. Then it computes a one-to-one encoding $\{T_{j,v}\}_{j,v}$ of *tag* = $\tau$. Return 1 if

$$c_j = \prod_{\mu=1}^{n_z} e\left(F_{j,\mu}, Z_\mu\right) \cdot \prod_{v=1}^{n_v} e\left(T_{j,v}, V_v\right) \cdot \prod_{i=1}^{n} e\left(G_{j,i}, M_i\right) \qquad j \in \{1, \ldots, m\}$$

holds and 0 otherwise.

SSTC from linearly homomorphic signatures

This section provides a generalization of the previous structure-preserving construction. The goal is to construct simulation-sound (thus non-malleable) commitments to vectors from linearly homomorphic signatures. It is to be noted that the prior art schemes for constructing SSTCs do not directly allow committing to vectors while preserving the feasibility of efficiently proving knowledge of the committed vector. The method is illustrated in Figure 2.

Let $\Pi$ = (Keygen, Sign, SignDerive, Verify) is a linearly homomorphic signature over $\mathbb{Z}_p^n$ for some large prime $p > 2^\lambda$. It is assumed that $\Pi$ uses groups $\mathbb{G}_1$ and $\mathbb{G}_2$ of public orders $p^k$ and $p$, respectively, for some $k \in \mathbb{N}$. It is also assumed that each signature σ lives in **SSTC.FakeOpen**$\left(\text{aux}, tk, tag, \widetilde{\text{com}}, (M_1, \ldots, M_n)\right)$: . The verification algorithm takes as input a purported signature σ $\in$ **SSTC.FakeOpen**$\left(\text{aux}, tk, tag, \widetilde{\text{com}}, (M_1, \ldots, M_n)\right)$: , a file identifier τ and a vector $\vec{m}$. It returns 1 if and

only if $F(\sigma, \vec{m}, \text{pk}, \tau) = 1_{\mathbb{G}_2}$, where $F$ is a function ranging over the group $\widetilde{\text{com}}$ and satisfying certain linearity properties. Namely, for each pk produced by Keygen and each $\tau$, it is required that $F(\sigma_1 \cdot \sigma_2, \vec{m}_1 + \vec{m}_2, \text{pk}, \tau) = F(\sigma_1, \vec{m}_1, \text{pk}, \tau) \cdot F(\sigma_2, \vec{m}_2, \text{pk}, \tau)$ for any vectors $\vec{m}_1$, $\vec{m}_2 \in \text{aux} = \left( (\widehat{M}_1, \ldots, \widehat{M}_n), \widehat{\text{dec}} \right)$ and any $\sigma_1$, $\sigma_2 \in \textbf{SSTC.FakeOpen}\left( \text{aux}, tk, tag, \widetilde{\text{com}}, (M_1, \ldots, M_n) \right)$. As a consequence $F(\sigma, \vec{m}, \text{pk}, \tau)^\omega = F(\sigma^\omega, \omega \cdot \vec{m}, \text{pk}, \tau)$ for any $\omega \in \mathbb{Z}_p$ and any $\sigma \in \textbf{SSTC.FakeOpen}\left( \text{aux}, tk, tag, \widetilde{\text{com}}, (M_1, \ldots, M_n) \right)$.

It is to be noted that this template only captures schemes in groups of public order, so that constructions based on the Strong RSA assumption are not covered. The reason is that, when working over the integers, messages and signature components may increase at each homomorphic operation, which makes it harder to render fake openings indistinguishable from original de-commitments.

**SSTC.Setup**($\lambda$, $n$): given the desired dimension $n \in \mathbb{N}$ of commited vectors, choose public parameters pp for the linearly homomorphic signature. Then run key generation algorithm $\Pi^{\text{SPS}}$. Keygen(pp, $n$) to obtain a public key pk and a private key sk. The commitment key is $pk$ = pk and the trapdoor $tk$ consists of sk.

**SSTC.Com**($pk$, $tag$, $\vec{m}$): to commit to a vector $\text{aux} = \left( (\widehat{M}_1, \ldots, \widehat{M}_n), \widehat{\text{dec}} \right)$ with respect to the $tag$, choose S1 an element

$$\sigma \xleftarrow{R} \mathbb{G}_1$$

in the signature space. Compute S2 and output S3 $c = F(\sigma, \vec{m}, \text{pk}, tag)$ by evaluating $F$ as the left-hand member of the verification equation $F(\sigma, \vec{m}, \text{pk}, \tau) = 1_{\mathbb{G}_2}$. The commitment string is com = $c$ whereas the de-commitment is dec = $\sigma$.

**SSTC.FakeCom**($pk$, $tk$, $tag$): proceeds like SSTC.Com but using a randomly chosen vector

$$\vec{m}_{fake} \xleftarrow{R} \mathbb{Z}_p^n.$$

If $\left( \widetilde{\text{com}}, \widehat{\text{dec}} \right)$ denotes the resulting commitment/decommitment pair, the algorithm sets $\widetilde{\text{com}} = \widehat{\text{com}}$ and aux = $\left( \vec{m}_{fake}, \widehat{\text{dec}} \right)$.

**SSTC.FakeOpen**$\left( \text{aux}, tk, tag, \widetilde{\text{com}}, \vec{m} \right)$: parses $\widetilde{\text{com}}$ as $\tilde{c} \in \widetilde{\text{com}}$ and aux as $\left( \vec{m}_{fake}, \widehat{\text{dec}} \right)$, where

$$\widehat{\text{dec}} = \hat{\sigma} \in \mathbb{G}_1.$$

It first generates a linearly homomorphic signature on the coordinate-wise difference $\vec{m} - \vec{m}_{fake} \in \text{aux} = \left( (\widehat{M}_1, \ldots, \widehat{M}_n), \widehat{\text{dec}} \right)$ for the $tag$ = $\tau$. Namely, using the trapdoor $tk$ = sk, it computes $\sigma' \leftarrow \Pi$. Sign(sk, $\tau, \vec{m} - \vec{m}_{fake}$). Finally, it computes $\tilde{\sigma} = \hat{\sigma} \cdot \sigma' \in \textbf{SSTC.FakeOpen}\left( \text{aux}, tk, tag, \widetilde{\text{com}}, (M_1, \ldots, M_n) \right)$ and returns $\widetilde{\text{dec}} = \tilde{\sigma}$.

**SSTC.Verify**($pk$, $tag$, $\vec{m}$, com, dec): parses S4 the commitment com as $c \in \widetilde{\text{com}}$ and the opening dec as $\sigma$

$\in$ **SSTC.FakeOpen**$\left(\text{aux}, tk, tag, \widetilde{\text{com}}, (M_1, \ldots, M_n)\right)$: . If these do not parse properly, it returns S5 0. Otherwise, it returns S6 1 if $c = F(\sigma, \vec{m}, \text{pk}, tag)$ and 0 otherwise.

The linearly homomorphic scheme of Attrapadung et al. (see N. Attrapadung, B. Libert, T. Peters. Computing on Authenticated Data: New Privacy Definitions and Constructions. In Asiacrypt'12, in Lecture Notes in Computer Science vol. 7658, pp. 367-385, 2012.) can be seen as a specific instantiation of the template where the group **SSTC.FakeOpen**$\left(\text{aux}, tk, tag, \widetilde{\text{com}}, (M_1, \ldots, M_n)\right)$: is a product $\mathbb{G}_1 = \mathbb{G}^2 \times \mathbb{Z}_p$, , which is a group for the operation $(\cdot, \cdot, +)$, and $\widetilde{\text{com}} = \mathbb{G}_T$. . In the scheme, **SSTC.FakeOpen**$\left(\text{aux}, tk, tag, \widetilde{\text{com}}, (M_1, \ldots, M_n)\right)$: and $\widetilde{\text{com}}$ thus have order $p^3$ and $p$, respectively. As for the linear function $F$, it can be instantiated as

$$F\left((\sigma_1, \sigma_2, s), \vec{m}, \text{pk}, \tau\right) := e(\sigma_1, g^{-1}) \cdot e(H_{\mathbb{G}}(\tau), \sigma_2) \cdot e(g_1^{m_1} \cdots g_n^{m_n} \cdot v^s, g^\alpha)$$

As a result, a new non-interactive simulation-sound trapdoor commitment to vectors based on the Computational Difffie-Hellman (CDH) assumption is obtained.

It is noted that this scheme can be optimized by removing the terms $v^s$ and $s$ so as to have

$$(\sigma_1, \sigma_2) = \left((\textstyle\prod_{i=1}^n g_i^{m_i})^\alpha \cdot H_{\mathbb{G}}(\tau)^r, g^r\right)$$

and

$$F\left((\sigma_1, \sigma_2), \vec{m}, \text{pk}, \tau\right) := e(\sigma_1, g^{-1}) \cdot e(H_{\mathbb{G}}(\tau), \sigma_2) \cdot e(g_1^{m_1} \cdots g_n^{m_n}, g^\alpha)$$

Indeed, although the terms $(v^s, s) \in \mathbb{G} \times \mathbb{Z}_p$ are necessary in the underlying signature scheme, they can be eliminated in the resulting commitment.

The optimization gives rise to the following SSTC scheme which relies on the CDH assumption and which allows committing to vectors. It is to be noted that the prior art non-malleable commitments based on the CDH assumption were - implicitly or explicitly - described in two papers but it was not clear how to extend them to commit to vectors in a modular way (see Y. Dodis, V. Shoup, S. Walfish. Efficient Constructions of Composable Commitments and Zero-Knowledge Proofs. In Crypto'08, Lecture Notes in Computer Science, vol. 5157, pp. 21-38, 2008. and R. Nishimaki, E. Fujisaki, K. Tanaka. A Multi-trapdoor Commitment Scheme from the RSA Assumption. In ACISP 2010, Lecture Notes in Computer Science, vol. 6168, pp. 182-199, 2010.)

**SSTC.Setup**$(\lambda, n)$: given the desired dimension $n \in \mathbb{N}$ of commited vectors, choose bilinear groups $(\mathbb{G}, , \mathbb{G}_T)$ of prime order $p > 2^\lambda$. Choose

$$\alpha \xleftarrow{R} \mathbb{Z}_p, \; g \xleftarrow{R} \mathbb{G}$$

and

$$u_0, \ldots, u_L \xleftarrow{R} \mathbb{G}$$

for some $L \in \text{poly}(\lambda)$. These elements $u_0, \ldots, u_L \in \mathbb{G}^{L+1}$ are used to implement a number-theoretic hash function $H_{\mathbb{G}} : \{0,1\}^L \to \mathbb{G}$, such that any $L$-bit string $\tau = \tau[1] \ldots \tau[L] \in \{0,1\}^L$ is mapped to the hash value $\left(\widehat{\text{com}}, \widehat{\text{dec}}\right)(\tau)$ = $u_0$. Then

$$g_i \xleftarrow{R} \mathbb{G}$$

are chosen for $i = 1$ to $n$ and the identifier space $\mathcal{T} := \{0,1\}^L$ is defined. The trapdoor is $tk = \alpha$ and the public key consists of

$$pk = \left((\mathbb{G}, \mathbb{G}_T), g, g^\alpha, \{g_i\}_{i=1}^n, \{u_i\}_{i=0}^L\right).$$

**SSTC.Com**$(pk, tag, \vec{m})$: to commit to a vector $\vec{m} = (m_1, \ldots m_n) \in \text{aux} = \left(\left(\widehat{M}_1, \ldots, \widehat{M}_n\right), \widehat{\text{dec}}\right)$ with respect to the $tag$, choose elements

$$\sigma_1, \sigma_2 \xleftarrow{R} \mathbb{G}$$

in the signature space and compute

$$c = e(g_1{}^{m_1} \cdots g_n{}^{m_n}, g^\alpha) \cdot e(g^{-1}, \sigma_1) \cdot e(H_{\mathbb{G}}(tag), \sigma_2).$$

Return the commitment string com $= c \in \mathbb{G}_T$ and the de-commitment dec $= (\sigma_1, \sigma_2) \in {}^1\mathbb{G}_2$.

**SSTC.FakeCom**$(pk, tk, tag)$: proceeds like **SSTC.Com** but using a randomly chosen vector

$$\vec{m}_{fake} \xleftarrow{R} \mathbb{Z}_p^n.$$

If $\left(\widehat{\text{com}}, \widehat{\text{dec}}\right)$ denotes the resulting commitment/decommitment pair, the algorithm sets $\widetilde{\text{com}} = \widehat{\text{com}}$ and aux $= \left(\vec{m}_{fake}, \widehat{\text{dec}}\right)$.

**SSTC.FakeOpen**$(\text{aux}, tk, tag, \widetilde{\text{com}}, \vec{m})$: parses $\widetilde{\text{com}}$ as $\tilde{c} \in \mathbb{G}_T$ and aux as $\left(\vec{m}_{fake}, \widehat{\text{dec}}\right)$, where

$$\widehat{\text{dec}} = (\sigma_1, \sigma_2) \in \mathbb{G}^2.$$

It first generates a linearly homomorphic signature $(\sigma'_1, \sigma'_2) \in {}^1\mathbb{G}_2$ on the difference $(m_1', \ldots, m_n') = \vec{m} - \vec{m}_{fake}$ $\in \text{aux} = \left(\left(\widehat{M}_1, \ldots, \widehat{M}_n\right), \widehat{\text{dec}}\right)$ for the tag $tag$. Namely, using $tk = \alpha$, it computes

$$\sigma'_1 = (g_1{}^{m'_1} \cdots g_n{}^{m'_n})^\alpha \cdot H_{\mathbb{G}}(tag)^r$$

and $\sigma'_2 = g^r$ which satisfies

$$1_{\mathbb{G}_T} = e\left(g_1{}^{m'_1} \cdots g_n{}^{m'_n}, g^\alpha\right) \cdot e(g^{-1}, \sigma'_1) \cdot e(H_{\mathbb{G}}(tag), \sigma'_2).$$

Finally, it computes $(\tilde{\sigma}_1, \tilde{\sigma}_2) = (\hat{\sigma}_1 \cdot \sigma'_1, \hat{\sigma}_2 \cdot \sigma'_2) \in {}^1\mathbb{G}_2$ and returns $\widetilde{dec} = (\tilde{\sigma}_1, \tilde{\sigma}_2)$.

**SSTC.Verify**(*pk, tag, $\vec{m}$*, com, dec): parses the commitment *com* as $c \in \widetilde{com} = \widehat{com}$ and the opening dec as $(\sigma_1, \sigma_2) \in {}^1\mathbb{G}_2$. If these do not parse properly, it returns 0. Otherwise, it returns 1 if $(\sigma_1, \sigma_2)$ satisfies $c = e(g_1{}^{m_1} \cdots g_n{}^{m_n}, g^\alpha) \cdot e(g^{-1}, \sigma_1) \cdot$

$$e(H_{\mathbb{G}}(tag), \sigma_2)$$

and 0 otherwise.

Before the presentation of a further SSTC scheme, there follows a description of its underlying linearly homomorphic structure-preserving signature scheme.

**Keygen**(pp, *n*): given a security parameter $\lambda$ and the dimension $n \in \mathbb{N}$ of the subspace to be signed, choose bilinear groups ($\mathbb{G}, , \widetilde{com} = \widehat{com}$) of prime order $p > 2^\lambda$ perform the following steps:

1. Choose

$$h \xleftarrow{R} \mathbb{G}$$

and

$$\alpha_z, \alpha_r, \beta_z \xleftarrow{R} \mathbb{Z}_p.$$

Define $g_z = h^{\alpha_z}$, $g_r = h^{\alpha_r}$ and $h_z = h^{\beta_z}$.
2. For each $i \in \{1, \ldots, n\}$, pick

$$\chi_i, \gamma_i, \delta_i \xleftarrow{R} \mathbb{Z}_p$$

and compute $g_i = g_z^{\chi_i} g_r^{\gamma_i}$,
3. Choose a random vector

$$\bar{\mathbf{w}} = (w_0, w_1, \ldots, w_L) \xleftarrow{R} \mathbb{G}^{L+1}$$

that defines a hash function $\left(\widehat{\mathrm{com}}, \widehat{\mathrm{dec}}\right) : \{0,1\}^L \to \mathbb{G}$, which maps

$$\tau = \tau[1] \dots \tau[L] \in \{0,1\}^L \text{ to } H_{\mathbb{G}}(\tau) = w_0 \cdot$$

$$\prod_{k=1}^{L} w_k{}^{\tau[k]}.$$

The public key consists of

$$\mathrm{pk} = (g_z, g_r, h_z, h, \{g_i, h_i\}_{i=1}^n, \overline{\mathbf{w}}) \in \mathbb{G}^{2n+4} \times \mathbb{G}^{L+1}$$

while the private key is $\mathrm{sk} = (h_z{}^{\alpha_r}, \{\chi_i, \gamma_i, \delta_i\}_{i=1}^n)$.

**Sign**(sk, $\tau$, $(M_1, \dots, M_n)$): to sign a vector $(M_1, \dots, M_n) \in \mathbb{G}^n$ with regard to the file identifier $\tau$ using $\mathrm{sk} = (h_z{}^{\alpha_r}, \{\chi_i, \gamma_i, \delta_i\}_{i=1}^n)$, choose

$$\theta, \rho \xleftarrow{R} \mathbb{Z}_p$$

and compute

$$z = g_r^{\theta} \cdot \prod_{i=1}^{n} M_i^{-\chi_i}, \quad r = g_z^{-\theta} \cdot \prod_{i=1}^{n} M_i^{-\gamma_i}, \quad u = (h_z{}^{\alpha_r})^{-\theta} \cdot \prod_{i=1}^{n} M_i^{-\delta_i} \cdot H_{\mathbb{G}}(\tau)^{-\rho}, \quad v$$

$$= h^{\rho}$$

The signature comprises $\sigma = (z, r, u, v) \in \mathbb{G}^4$.

**SignDerive**$\left(\mathrm{pk}, \tau, \{(\omega_i, \sigma^{(i)})\}_{i=1}^{\ell}\right)$: given pk, a file identifier $\tau$ and $\ell$ tuples $(\omega_i, \sigma^{(i)})$, parse each signature $\sigma^{(i)}$ as $\sigma^{(i)} = (z_i, r_i, u_i, v_i) \in \mathcal{T}$ for $i = 1$ to $\ell$. Then choose

$$\rho' \xleftarrow{R} \mathbb{Z}_p$$

and compute

$$z = \prod_{i=1}^{\ell} z_i^{\omega_i} \quad r = \prod_{i=1}^{\ell} r_i^{\omega_i} \quad u = \prod_{i=1}^{\ell} u_i^{\omega_i} \cdot H_{\mathbb{G}}(\tau)^{-\rho'} \quad v = \prod_{i=1}^{\ell} v_i^{\omega_i} \cdot h^{\rho'}$$

and return $\sigma = (z, r, u, v)$.

**Verify**(pk, $\sigma$, $\tau$, $(M_1, \dots, M_n)$): given a signature $\sigma = (z, r, u, v) \in \mathcal{T}$, a file identifier $\tau$ and a vector $(M_1, \dots, M_n)$,

return 1 if and only if $(M_1, \dots, M_n) \neq (1_{\mathbb{G}}, \dots, 1_{\mathbb{G}})$ and $(z, r, u, v)$ satisfy the equalities

$$1_{\mathbb{G}_T} = e(g_z, z) \cdot e(g_r, r) \cdot \prod_{i=1}^{n} e(g_i, M_i),$$

$$1_{\mathbb{G}_T} = e(h_z, z) \cdot e(h, u) \cdot e(H_{\mathbb{G}}(\tau), v) \cdot \prod_{i=1}^{n} e(h_i, M_i).$$

<u>SSTC from linearly homomorphic structure-preserving signatures</u>

A particularly advantageous embodiment is obtained by applying the Construction of Structure-Preserving Simulation-Sound Trapdoor Commitments to the linearly homomorphic signature described hereinafter.

Like the underlying homomorphic signature, the security of the resulting SSTC (which is structure-preserving) relies on the hardness of the Simultaneous Double Pairing (SDP) problem.

**SSTC.Setup**$(\lambda, n)$: given the desired dimension $n \in \mathbb{N}$ of commited vectors, choose bilinear groups $(\mathbb{G}, , \mathbb{G}_T)$ of prime order $p > 2^\lambda$. Then:

1. Choose

$$h \xleftarrow{R} \mathbb{G}$$

and

$$\alpha_z, \alpha_r, \beta_z \xleftarrow{R} \mathbb{Z}_p.$$

2. Define $g_z = h^{\alpha_z}$, $g_r = h^{\alpha_r}$ and $h_z = h^{\beta_z}$.
3. For each $i \in \{1, \dots, n\}$, pick

$$\chi_i, \gamma_i, \delta_i \xleftarrow{R} \mathbb{Z}_p$$

and compute $g_i = g_z^{\chi_i} g_r^{\gamma_i}$, $h_i = h_z^{\chi_i} h^{\delta_i}$.
4. Choose a random vector

$$\overline{\mathbf{w}} = (w_0, \dots, w_L) \xleftarrow{R} \mathbb{G}^{L+1}$$

that defines a hash function $\left(\widehat{\mathrm{com}}, \widehat{\mathrm{dec}}\right) : \{0,1\}^L \to \mathbb{G}$, which maps $\tau = \tau[1] \dots \tau[L] \in \{0,1\}^L$ to

$$H_{\mathbb{G}}(\tau) = w_0 \cdot$$

$$\prod_{k=1}^{L} w_k^{\tau[k]} .$$

The public key consists of

$$\text{pk} = (g_z, g_r, h_z, h, \{g_i, h_i\}_{i=1}^{n}, \overline{\mathbf{w}}) \in \mathbb{G}^{2n+4} \times \mathbb{G}^{L+1}$$

while the trapdoor is $tk = (h_z^{\alpha_r}, \{\chi_i, \gamma_i, \delta_i\}_{i=1}^{n})$.

**SSTC.Com**(*pk, tag, ($M_1, \ldots, M_n$)*): to commit to a vector ($M_1, \ldots, M_n$) $\in \mathbb{G}^n$ , choose

$$z, r, u, v \xleftarrow{R} \mathbb{G}$$

and compute

$$c_1 = e(g_z, z) \cdot e(g_r, r) \cdot \prod_{i=1}^{n} e(g_i, M_i),$$

$$c_2 = e(h_z, z) \cdot e(h, u) \cdot e(H_{\mathbb{G}}(tag), v) \cdot \prod_{i=1}^{n} e(h_i, M_i).$$

Then return com = ($c_1, c_2$) $\in \mathbb{G}_T^2$ and dec = (*z, r, u, v*) $\in \mathcal{T}$ .

**SSTC.FakeCom**(*pk, tk, tag*): choose

$$\widehat{M}_1, \ldots, \widehat{M}_n \xleftarrow{R} \mathbb{G}$$

and

$$z, r, u, v \xleftarrow{R} \mathbb{G}$$

and compute

$$c_1 = e(g_z, z) \cdot e(g_r, r) \cdot \prod_{i=1}^{n} e(g_i, \widehat{M}_i),$$

$$c_2 = e(h_z, z) \cdot e(h, u) \cdot e(H_{\mathbb{G}}(tag), v) \cdot \prod_{i=1}^{n} e(h_i, \widehat{M}_i).$$

Then return com = $(c_1, c_2) \in$ **SSTC.FakeOpen**$(\text{aux}, tk, tag, \widetilde{\text{com}}, \vec{m})$: and aux = $((\hat{M}_1, \dots, \hat{M}_n), z, r, u, v)$.

**SSTC.FakeOpen**$(\text{aux}, tk, tag, \widetilde{\text{com}}, (M_1, \dots, M_n))$: generate a linearly homomorphic signature $(z', r', u', v')$ on the vector $(M_1/\hat{M}_1, \dots, M_n/\hat{M}_n)$ using the underlying linearly homomorphic SPS described hereinafter. Then compute $(\tilde{z}, \tilde{r}, \tilde{u}, \tilde{v}) = (z \cdot z', r \cdot r', u \cdot u', v \cdot v')$. Return dec = $(\tilde{z}, \tilde{r}, \tilde{u}, \tilde{v})$, which satisfies

$$c_1 = e(g_z, \tilde{z}) \cdot e(g_r, \tilde{r}) \cdot \prod_{i=1}^{n} e(g_i, M_i),$$

$$c_2 = e(h_z, \tilde{z}) \cdot e(h, \tilde{u}) \cdot e(H_{\mathbb{G}}(tag), \tilde{v}) \cdot \prod_{i=1}^{n} e(h_i, M_i).$$

**SSTC.Verify**(*pk*, *tag*, $(M_1, \dots, M_n)$, com, dec): parses the commitment com as $(c_1, c_2)$ $\in$ **SSTC.FakeOpen**$(\text{aux}, tk, tag, \widetilde{\text{com}}, \vec{m})$: and the opening dec as $(z, r, u, v) \in \mathcal{T}$ . If these do not parse properly, it returns 0. Otherwise, it returns 1 if $(z, r, u, v)$

$$c_1 = e(g_z, z) \cdot e(g_r, r) \cdot \prod_{i=1}^{n} e(g_i, M_i),$$

$$c_2 = e(h_z, z) \cdot e(h, u) \cdot e(H_{\mathbb{G}}(tag), v) \cdot \prod_{i=1}^{n} e(h_i, M_i).$$

and 0 otherwise.

The skilled person will appreciate that the schemes of the present invention, which works on vectors, also works on scalars (for which the dimension *n* equals 1). Thus, the dimension *n* can be any positive integer: 1, 2, 3...
It will be appreciated that the schemes of the present invention can provide a commitment scheme with the desired features.
Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A method of generating a non-malleable cryptographic commitment, the method comprising the steps in a processor (120) of a device (100), of:

    - receiving a vector $\vec{m}$, a public verification key of a homomorphic signature scheme associated with a space where signatures live, and a tag;
    - choosing an element σ in the space where signatures live;
    - generating a commitment *c* using the vector $\vec{m}$, the public verification key, the tag and the element σ; and
    - outputting the commitment *c*;

    wherein the commitment *c* is generated by running the verification algorithm of the homomorphic signature scheme on the vector $\vec{m}$, the public verification key, the tag and the element σ.

2. The method of claim 1, wherein the size of the commitment $c$ is independent of the size of the vector $\vec{m}$.

3. The method of claim 1, wherein the commitment $c$ is structure-preserving.

4. The method of claim 1, wherein the dimension of the vector $\vec{m}$ is greater than or equal to 2.

5. The method of claim 1, wherein the commitment $c$ allows to prove knowledge of an opening using zero-knowledge proof.

6. The method of claim 1, wherein the commitment $c$ is generated as intermediate values resulting from the verification algorithm.

7. A device (100) for generating a non-malleable cryptographic commitment, the device (100) comprising:

   - at least one interface (110) configured to:

     - receive a vector $\vec{m}$, a public verification key of a homomorphic signature scheme associated with a space where signatures live, and a tag; and
     - output a commitment $c$; and

   - a processor (120) configured to:

     - choose an element $\sigma$ in the space where signatures live; and
     - generate the commitment $c$ using the vector $\vec{m}$, the public verification key, the tag and the element $\sigma$;

   wherein the processor is configured to generate the commitment c by running the verification algorithm of the homomorphic signature scheme on the vector m, the public verification key, the tag and the element σ.

8. The device of claim 7, wherein the size of the commitment $c$ is independent of the size of the vector $\vec{m}$.

9. The device of claim 7, wherein the commitment $c$ is structure-preserving.

10. The device of claim 7, wherein the dimension of the vector $\vec{m}$ is greater than or equal to 2.

11. The device of claim 7, wherein the commitment $c$ allows to prove knowledge of an opening using zero-knowledge proof.

12. The device of claim 7, wherein the commitment $c$ is generated as intermediate values resulting from the verification algorithm.

13. A non-transitory computer program product (140) storing instructions that, when executed by a processor, perform the method of any one of claims 1-6.

Commiting device | Verification device

140

I/O 110 ——— I/O 210

200

240

Mem. 130 — CPU 120

Mem. 230 — CPU 220

100

## Figure 1

S1 — Choose $\sigma \xleftarrow{R} \mathbb{G}_1$ in the signature space.

S2 — Compute commitment $c = F(\sigma, \vec{m}, \mathrm{pk}, tag)$ by evaluating $F$ as the left-hand member of the verification equation $F(\sigma, \vec{m}, \mathrm{pk}, \tau) = 1_{\mathbb{G}_2}$.

S3 — Output commitment $com = c$ and decommitment $dec = \sigma$.

S4 — Parses the commitment $com$ as $c \in \mathbb{G}_2$ and the opening $dec$ as $\sigma \in \mathbb{G}_1$.

S5 — If $com$ and $dec$ do not parse properly, return 0.

S6 — Otherwise, it return 1 if $c = F(\sigma, \vec{m}, \mathrm{pk}, tag)$ and 0 otherwise.

## Figure 2

Europäisches
Patentamt

European
Patent Office

Office européen
des brevets

# EUROPEAN SEARCH REPORT

**Application Number**

EP 13 30 5452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JUAN A GARAY ET AL: "Strengthening Zero-Knowledge Protocols using Signatures", INTERNATIONAL ASSOCIATION FOR CRYPTOLOGIC RESEARCH,, vol. 20030815:163543, 15 August 2003 (2003-08-15), pages 1-32, XP061000748, [retrieved on 2003-08-15] * sections 1, 4 and 6 * | 1-13 | INV. H04L9/00 |
| A | NUTTAPONG ATTRAPADUNG ET AL: "Computing on Authenticated Data: New Privacy Definitions and Constructions", 2 December 2012 (2012-12-02), ADVANCES IN CRYPTOLOGY ASIACRYPT 2012, SPRINGER BERLIN HEIDELBERG, BERLIN, HEIDELBERG, PAGE(S) 367 - 385, XP047011248, ISBN: 978-3-642-34960-7 * section 2.3 * | 1-13 | |
| A | MASAYUKI ABE ET AL: "Group to Group Commitments Do Not Shrink", 15 April 2012 (2012-04-15), ADVANCES IN CRYPTOLOGY EUROCRYPT 2012, SPRINGER BERLIN HEIDELBERG, BERLIN, HEIDELBERG, PAGE(S) 301 - 317, XP019175400, ISBN: 978-3-642-29010-7 * section 2.4 * | 1-13 | TECHNICAL FIELDS SEARCHED (IPC) H04L |

The present search report has been drawn up for all claims

| Place of search | Date of completion of the search | Examiner |
|---|---|---|
| Munich | 23 September 2013 | Billet, Olivier |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6301664 B

### Non-patent literature cited in the description

- **P. MACKENZIE ; K. YANG.** On Simulation-Sound Trapdoor Commitments. *Eurocrypt'04, Lecture Notes in Computer Science,* 2004, vol. 3027, 382-400
- **G. DI CRESCENZO ; Y. ISHAI ; R. OSTROVSKY.** Non-Interactive and Non-Malleable Commitment. *STOC'98,* 1998, 141-150
- **R. GENNARO ; S. MICALI.** Independent Zero-Knowledge Sets. *ICALP'06, Lecture Notes in Computer Science,* 2006, vol. 4052, 34-45
- Short Group Signatures. **D. BONEH ; X. BOYEN ; H. SHACHAM.** Crypto'04, Lecture Notes in Computer Science. Springer, 2004, vol. 3152, 41-55
- **M. ABE ; K. HARALAMBIEV ; M. OHKUBO.** Signing on Elements in Bilinear Groups for Modular Protocol Design. *Cryptology ePrint Archive: Report 2010/133,* 2010
- **G. DI CRESCENZO ; Y. ISHAI, R.** Ostrovsky. Non-Interactive and Non-Malleable Commitment. *STOC'98,* 1998, 141-150
- **G. DI CRESCENZO ; Y. ISHAI ; R. OSTROVSKY.** *Method and System for Non-Malleable and Non-Interactive Cryptographic Commitment in a Network,* 2001
- **G. DI CRESCENZO ; J. KATZ ; R. OSTROVSKY ; A. SMITH.** Efficient and Non-interactive Non-malleable Commitment. *Eurocrypt'01, Lecture Notes in Computer Science,* 2001, vol. 2045, 40-59
- **I. DAMGÅRD ; J. GROTH.** Non-interactive and re-usable non-malleable commitment schemes. *STOC'03,* 2003, 426-437
- **J. GARAY ; P. MACKENZIE ; K. YANG.** Strengthening Zero-Knowledge Protocols Using Signatures. *Eurocrypt'03, Lecture Notes in Computer Science,* 2003, vol. 2656, 177-194
- **P. MACKENZIE ; K. YANG.** On Simulation-Sound Trapdoor Commitments. *Eurocrypt'04, Lecture Notes in Computer Science,* 2004, vol. 3027, 382-400
- **R. GENNARO.** Multi-Trapdoor Commitments and Their Applications to Proofs of Knowledge Secure Under Concurrent Man-in-the-Middle Attacks. *Crypto'04, Lecture Notes in Computer Science,* 2004, vol. 3152, 220-236

- **E. FUJISAKI.** New Constructions of Efficient Simulation-Sound Commitments Using Encryption and Their Applications. *CT-RSA'12, Lecture Notes in Computer Science,* 2012, vol. 7178, 136-155
- Simulation-Sound NIZK Proofs for a Practical Language and Constant Size Group Signatures. **J. GROTH.** Asiacrypt'06, Lecture Notes in Computer Science. Springer, 2006, vol. 4284, 444-459
- **J. GROTH ; A. SAHAI.** Efficient non-interactive proof systems for bilinear groups. *Eurocrypt'08, Lecture Notes in Computer Science,* 2008, vol. 4965, 415-432
- **J. CATHALO ; B. LIBERT ; M. YUNG.** Group Encryption: Non-Interactive Realization in the Standard Model. *Asiacrypt'09, Lecture Notes in Computer Science,* 2009, vol. 5912, 179-196
- **J. GROTH.** Homomorphic trapdoor commitments to group elements. *Cryptology ePrint Archive: Report 2009/007,* 2009
- **M. FISCHLIN ; B. LIBERT ; M. MANULIS.** Non-interactive and Re-usable Universally Composable String Commitments with Adaptive Security. *Asiacrypt'11, Lecture Notes in Computer Science,* 2011, vol. 7073, 468-485
- **R. CANETTI.** Universally Composable Security: A New Paradigm for Cryptographic Protocols. *FOCS'01,* 2001, 136-145
- **CANETTI, M. FISCHLIN.** Universally Composable Commitments. In Crypto'01. *Lecture Notes in Computer Science,* 2001, vol. 2139, 19-40
- **M. ABE ; K. HARALAMBIEV ; M. OHKUBO.** Group to Group Commitments Do Not Shrink. *Eurocrypt'12, Lecture Notes in Computer Science,* 2012, vol. 7237, 301-317
- **R. CANETTI.** Universally Composable Security: A New Paradigm for Cryptographic Protocols. *FOCS'01,* 2001, 136-145
- **N. ATTRAPADUNG ; B. LIBERT ; T. PETERS.** Computing on Authenticated Data: New Privacy Definitions and Constructions. *Asiacrypt'12, in Lecture Notes in Computer Science,* 2012, vol. 7658, 367-385

- **Y. DODIS ; V. SHOUP ; S. WALFISH.** Efficient Constructions of Composable Commitments and Zero-Knowledge Proofs. *Crypto'08, Lecture Notes in Computer Science,* 2008, vol. 5157, 21-38

- **R. NISHIMAKI ; E. FUJISAKI ; K. TANAKA.** A Multi-trapdoor Commitment Scheme from the RSA Assumption. *ACISP 2010, Lecture Notes in Computer Science,* 2010, vol. 6168, 182-199